(19) **Europäisches Patentamt**
**European Patent Office**
**Office européen des brevets**

(11) **EP 3 121 147 A1**

(12) **EUROPEAN PATENT APPLICATION**
published in accordance with Art. 153(4) EPC

(43) Date of publication:
25.01.2017 Bulletin 2017/04

(51) Int Cl.:
*C01B 3/02* (2006.01)     *C01B 3/36* (2006.01)
*B01J 7/00* (2006.01)     *B01J 12/00* (2006.01)

(21) Application number: 15766035.8

(22) Date of filing: 19.03.2015

(86) International application number:
PCT/RU2015/000160

(87) International publication number:
WO 2015/142225 (24.09.2015 Gazette 2015/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(30) Priority: 20.03.2014 RU 2014110691

(71) Applicant: INFRA Carbon LIMITED
3095 Limassol, (CY)

(72) Inventors:
• MORDKOVICH, Vladimir Zalmanovich
Moscow 117209 (RU)

• DEREVICH, Igor Vladimirovich
Moscow 111555 (RU)
• ERMOLAEV, Vadim Sergeevich
Moscow 129323 (RU)
• ERMOLAEV, Ilia Sergeevich
Moscow 127490 (RU)
• MITBERG, Eduard Borisovich
Ekaterinburg 620100 (RU)
• SOLOMONIK, Igor Grigorievich
Moscow 117534 (RU)
• KULCHAKOVSKY, Petr Ivanovich
g. Obninsk 249030 (RU)

(74) Representative: Hertin und Partner
Rechts- und Patentanwälte PartG mbB
Kurfürstendamm 54/55
10707 Berlin (DE)

(54) **METHOD FOR PRODUCING HYDROGEN-CONTAINING GAS, AND REACTOR FOR IMPLEMENTING SAID METHOD**

(57) The invention is used in gas chemistry for producing hydrogen-containing gas on the base of CO and $H_2$ mixture (syngas) from natural gas and other hydrocarbon gases. The object is to suppress side reactions resulting in soot formation when conducting the process in high productivity mode, and also to provide for an uncomplicated reactor design while maintaining compact dimensions thereof. The method for producing hydrogen-containing gas comprises mixing natural gas with oxygen, partially oxidizing the natural gas with oxygen at a temperature ranging from 1,300°C to 1,700°C to obtain hydrogen-containing gas, and cooling a stream of the obtained hydrogen-containing gas. The cooling is performed until the temperature drops below 550°C at a rate above 100,000°C/sec. The reactor comprises successively arranged in the course of production process: a means for supplying natural gas and oxygen, a natural gas and oxygen mixing zone, a reaction zone for carrying out partial oxidation of natural gas with oxygen to obtain hydrogen-containing gas, and a cooling zone for cooling a stream of the obtained hydrogen-containing gas/ The cooling zone is provided with a cooled body of revolution to enable intensive cooling the stream of the hydrogen-containing gas by contacting thereof with the body of revolution.

Fig. 1

**Description**

Field of the Invention

The present invention relates to the field of gas chemistry and can be used to produce hydrogen-containing gas on the base of a mixture of CO and $H_2$ (syngas) from natural gas and other hydrocarbon gases.

Background of the Invention

Processes for producing hydrogen-containing gas from natural gas has been used in industry since the beginning of the 20th century and are based on partial oxidation of methane with oxygen, water steam or carbon dioxide. Various combinations of these processes (steam-carbon dioxide conversion, autothermal reforming) are also known.
A partial oxidation process is currently most promising because it enables producing a syngas with a component ratio required to carry out a number of large-tonnage processes, such as methanol synthesis or Fisher-Tropsch synthesis. Processes known in the prior art commonly require the use of a catalyst. For example, systems $Ru/Al_2O_3$, $Pt/Al_2O_3$, $Pd/Al_2O_3$, $Ni/Al_2O_3$, $Rh/MgO$ and $Rh/ZrO_2$ are catalysts for the partial oxidation process (O.V. Krylov, Heterogeneous catalysis, Moscow, Academkniga, 2004, pp. 605-606).
A simpler homogeneous process without the use of a catalyst is possible but it requires to carry out a reaction at temperatures more than 1300°C at which chemical equilibrium is shifted to the side of the formation of CO and $H_2$. Such non-catalytic process was developed in the middle of the last century and is combustion of hydrocarbons in a flow of oxidant in an unconfined space. By now, modifications of this process, for example, with the use of plasma, have been developed (Xing Rao et al. Combustion Dynamics of Plasma-Enhanced Premixed and Nonpremixed Flames, Transactions on plasma science, vol. 38, no. 12, December 2010, pp. 3265-3271), but they find no practical application.
Main reactions observed in the process are the following:

$$CH_4 + 1/2O_2 = CO + 2H_2$$

$$CO + H_2 = C + H_2O$$

$$CH_4 + 2O_2 = CO_2 + 2H_2O$$

$$H_2 + 1/2O_2 = H_2O$$

$$CO + 1/2O_2 = CO_2$$

The above-mentioned system of reactions shows that products of the process may be, besides hydrogen and carbon monoxide, carbon (soot), water and carbon dioxide that are undesirable by-products of the process. It is known from the existing kinetic models of soot formation that a characteristic time of soot particles formation is more than 5 ms (Oleg A. Louchev, Thomas Laude, Yoichiro Sato, and Hisao Kanda. Diffusion-controlled kinetics of carbon nanotube forest growth by chemical vapor deposition, Journal of Chemical Physics, vol. 118, no. 16, April 2003, pp. 7622-7634).
Main requirements for the process of hydrogen-containing gas formation and for a related device are high productivity and small size of a reactor, ensuring adequate mixing of feed gas and oxidizing gas to prevent formation of local centres of detonation and ensure the flame stabilization, suppressing side reactions of formation of carbon, water and carbon dioxide.
It is known that the thermal partial oxidation process can be technologically implemented in a reactor, in which reaction products are cooled through convective heat transfer, expansion of the reaction products and use of a drip curtain (cooling with water).
Reactors in which the drip curtain is used as a method for cooling the reaction products are currently most promising due to that main design concepts of the reactors are well-thought-out. Such reactors have successively arranged a reaction zone (combustion zone) and a combustion product cooling zone that is also a washing zone enabling to remove soot formed in side reactions. In the reactor, both chemical reactions in an unconfined space and physical processes occur simultaneously, where the physical processes are heat transfer from the reaction products to a heat transfer agent and evaporation of the heat transfer agent, a process of non-selective physical absorption, in which mainly side reaction products, such as soot, carbon dioxide etc., are absorbed.

One of the main problems faced by persons skilled in the art when designing reactors for non-catalytic high-temperature partial oxidation used to produce hydrogen-containing gases are side reactions of soot formation during chemical reaction in the combustion zone as well as during the subsequent cooling of the reaction products. In the first case, the reactions of soot formation take place in the outer layer of the flame characterized by lower temperatures, and these reactions, when partial oxidation of methane-rich hydrocarbon gases, are generally insignificant because of extremely short residence times of reagents in the reaction zone. In the second case, when the product cooling rate is not high enough, soot particles are formed in the significant amount and accumulated in the reactor system, that lead to reduction in the reactor system lifetime. Furthermore, the formation of soot particles has effect on the $H_2/CO$ ratio and, therefore, on a composition of the produced syngas. It is because formation of soot is possible at temperatures below 700°C but is kinetically limited, and equilibrium of soot formation reactions rapidly shifts to the side of the reagents at temperatures higher 1300°C, so probability of the growth of soot particles is high enough only at intermediate temperatures (700 to 1300°C).

Another problem of the most reactors is complexity of design of an assembly for cooling products as well as need to use special materials because of high reaction temperatures (higher 1300°C) and an aggressive corrosive medium. The use of such special structural materials results in significant increase in cost of the reactor and in special requirements for maintenance and repair of the reactor, and moreover, the reactor lifetime is significantly decreased.

A method for producing syngas by non-catalytic partial oxidation is described and known as SGP (Shell Gasification Process), see C.J. Kuhre, et al. Partial Oxidation Grows Stronger in U.S., Oil and Gas Journal, vol. 69, No. 36, Sep. 6, 1971.).

This method comprises the use of a burner particularly selected for each type of oxidized feedstock, carrying out an oxidation process in a hollow cylindrical steel reactor with refractory lining at increased pressures (up to 58 atm), and cooling reaction products by heat exchange with water through a wall of an outer boiler having a special design which prevents carbonization of the heat exchange surface, thereby providing no decrease in the heat transfer coefficient as well as absence of local overheat areas. Heat exchange pipes helically coiled and specially calculated velocity of the combustion product stream enable to cool the syngas with high content of soot (up to 3 wt.%), which syngas is produced for using as the feedstock of heavy fuels, as well as to provide long operation period without shutdown for maintenance of the device. The main disadvantages of said method are need for strictly predetermined composition of the feedstock to maintain thermal conditions of the process and presence of soot in the reaction products.

Known in the art are a method and a device for producing syngas from raw hydrocarbons and air by non-catalytic partial oxidation according to the patent RU 2191743 C2, 2002. The method for producing syngas comprises mixing raw hydrocarbons with air, forced ignition of the air-hydrocarbons mixture and partial oxidation of the raw hydrocarbons with atmospheric oxygen in a reaction zone that is a flow combustion chamber, where forced ignition is carried out at the oxygen to raw hydrocarbons ratio of 0,6-0,7, and said ratio is adjusted to 0,30-0,56 after heating the flow combustion chamber. Cooling the products occurs as a result of their expansion as well as convective heat exchange in a recuperative heat exchanger embedded into the reactor and made in the form of a system of tube heaters for heating the raw hydrocarbons and air. A heat transfer agent in this system is combustion reaction products. In addition to entering in the tube heaters, air also enters in an impermeable housing of the combustion chamber provided with insertions of refractory material, such as ceramic material, and forms an additional cooling interlayer. The reactor design ensures a cooling rate of the partial oxidation products at least of 3000°C/s but does not ensures suppression of the formation of carbon compaction products (soot). In addition to the mentioned disadvantage related to slow cooling, such reactor is difficult to manufacture and maintain. The process is carried out using air as the heat transfer agent resulting in significant dilution of the reaction products. Moreover, the process is characterized by production of the main products, i.e. hydrogen and carbon monoxide, at the ratio 1:1.6 that does not conform to requirements for carrying out some catalytic processes of syngas processing (e.g. methanol synthesis or Fisher-Tropsch synthesis).

Known in the art are a method and a device for producing syngas by non-catalytic partial oxidation of hydrocarbons in the internal space of a cylinder of an internal combustion engine (the patent RU 2096313 C1, 1997). The method is that premixed raw hydrocarbons and air are heated to the temperature of 200-450°C and fed in the engine cylinder when the engine piston moves to the bottom dead point. When the engine piston moves to the top dead point, self-ignition of the mixture occurs with increasing the temperature to 1300-2300°C for a time period of $10^{-2}$-$10^{-3}$ s, and when the engine piston moves to the bottom dead point again, the products are cooled due to their expansion and then they are removed. The described cycle is repeated with a rate more than 350 min$^{-1}$. The main disadvantage of this method is that the process is not continuous because it is cyclical, i.e. the method cannot be carried out with the continuous forward flow of reagents. Moreover, this device is not sufficiently reliable and durable because its operation involves movements of main components (such as the engine piston, a crank and valves) resulting in wear of these components.

Known in the art are a method and device for producing syngas by non-catalytic partial oxidation of hydrocarbon gases according to the patent CN 101245263 B, 2011. In this method, obtained products coming out of a combustion chamber in the form of a hollow cylinder with a tapered end portion and a cooled jacket enter in a cooling zone where they successively pass through a drip curtain area, a water layer and bubble trays and then exit from the reactor. In this case, the products not only are cooled, but also are cleaned from soot (the soot content in the obtained syngas does not exceed 1-3 ppm), but this method does not ensure suppression of soot formation reactions. This method is considered as a prior art closest to the present invention.

It should be noted that, combustion of hydrocarbons in the mentioned prior art methods occurs in an unconfined space that results in increased fire and hazard and explosibility.

It is possible to overcome the above-mentioned prior art disadvantages by significant decreasing the cooling time of the reaction products and using a device having simple and reliable design.

Summary of the Invention

A technical object of the present invention is to provide a method for producing hydrogen-containing gas on the base of mixture of carbon monoxide and hydrogen (syngas) by non-catalytic high-temperature partial oxidation of raw hydrocarbon gases, which method would ensure suppression of side reactions resulting in soot formation when conducting the process mainly in high productivity mode. Also, an object of the present invention is to provide a reactor for carrying out the present method, which reactor would have uncomplicated design and compact dimensions.

Said object regarding the method according to the present invention is achieved by providing a method for producing hydrogen-containing gas, which method comprises mixing natural gas with oxygen, partial oxidation of natural gas by oxygen at a temperature ranging from 1300°C to 1700°C to obtain a hydrogen-containing gas, and cooling a stream of the obtained hydrogen-containing gas, wherein, according to the present invention, the stream of the obtained hydrogen-containing gas is cooled to a temperature lower 550°C at a cooling rate more than 100,000°C/s.

Said cooling rate of the stream of the obtained hydrogen-containing gas ensures a time of cooling said stream to the temperature lower 550°C no more than 5 ms that assuredly enables to carry out the present method without formation of soot as a by-product.

To ensure said cooling rate, said cooling may be carried out by contacting the stream of the hydrogen-containing gas with a cooled body of revolution. When contacting with the cooled body of revolution, the hydrogen-containing gas stream preferably has a linear velocity of at least 40 m/s.

To intensify the cooling process, water in the amount of at least 10 kg per 1 kg of the hydrogen-containing gas can be injected in the stream of the hydrogen-containing gas before contacting said stream with the cooled body of revolution.

To ensure fire and explosion safety of the method according to the present invention, mixing natural gas with oxygen and partial oxidation of natural gas by oxygen can be carried out in a porous medium of a refractory material that may be, for example, a ceramic material.

Said object regarding the reactor according to the present invention is achieved by providing a reactor for producing hydrogen-containing gas, which reactor comprises successively arranged in the course of the production process: a means for supplying natural gas and oxygen, a natural gas and oxygen mixing zone, a reaction zone for carrying out partial oxidation of natural gas with oxygen to obtain hydrogen-containing gas, and a cooling zone for cooling a stream of the obtained hydrogen-containing gas, wherein, according to the present invention, the cooling zone is provided with a cooled body of revolution to enable intensive cooling the stream of the hydrogen-containing gas by contacting thereof with the body of revolution.

The cooled body of revolution preferably has a streamline shape to prevent formation of reverse streams when the velocity of the hydrogen-containing gas stream is 40 m/s and higher.

To further intensify the process of cooling the hydrogen-containing gas stream, the reactor according to the present invention can be provided with at least one injector to inject water in the cooling zone upstream from the body of revolution.

To ensure fire and explosion safety of the process, the mixing zone and the reaction zone in the reactor according to the present invention can be filled up with a porous refractory material.

Brief Description of the Drawings

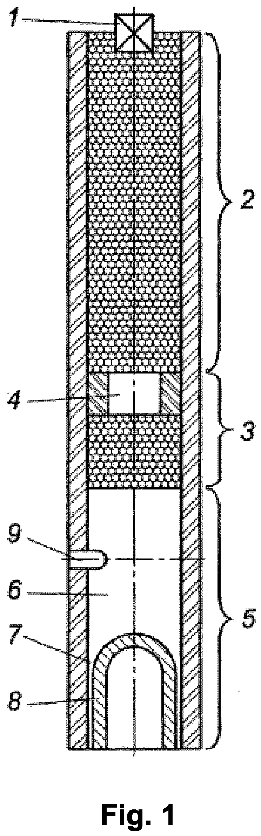

Fig. 1 schematically shows a general view of an exemplary embodiment of the reactor according to the present invention, in a longitudinal section.

Detailed Description of the Invention

In the embodiment shown in Fig. 1, the reactor for carrying out the method according to the present invention is made in the form of a vertical apparatus with supply of reagents from above, in which gas stream respectively moves from up to down. The reactor comprises successively arranged a means for supplying natural gas and oxygen in the form of an inlet assembly 1, a natural gas and oxygen mixing zone 2, a reaction zone 3 (zone for carrying out partial oxidation of natural gas with oxygen) providing with a combustion chamber 4, and a cooling zone 5 for cooling the stream of the obtained hydrogen-containing gas. The mixing zone 2 and the reaction zone 3 (except the combustion chamber 4) are filled up with a porous refractory ceramic material. The cooling zone 5 comprises a first (in the course of flow direction of the reaction products) hollow and empty portion 6 and a second (in the course of flow direction of the reaction products) portion 7 in which a cooled body of revolution 8 is installed. The first portion 6 of the cooling zone 5 is provided with one or more injectors 9 to inject water.

The method according to the present invention is carried out in the present reactor as follows.

Natural gas and oxygen pass through the inlet assembly 1 and enter into the mixing zone 2 filled up with the porous ceramic material, then the mixture enters into the combustion chamber 4 where the mixture is ignited by a spark or by an incandescent body, for example, a platinum filament, and then enters into the reaction zone 3 where the hydrogen-containing gas (syngas) is formed. Further, the syngas is mixed with water injected through the injectors 9 in the first portion 6 of the cooling zone 5 and enters into the second portion 7 of the cooling zone 5 where the syngas is contacted with the cooled body of revolution 8 by flowing the full circumference of the body of revolution 8 along the axis 10 whereby the heat of the chemical reaction is removed by convective heat transfer between the syngas and a cooling agent, such as water, through the wall of the cooled body of revolution 8, in which the cooling agent partially evaporates thereby absorbing the transferred heat due to evaporation heat.

As numerous studies conducted by the inventors of the present invention have shown (results of these studies are partially presented in the table below), to maintain optimum operating conditions of the reactor, at which conditions formation of by-products is not occurs, is possible by cooling the obtained syngas for a time no more than 5 ms that is achieved if the cooling rate of the syngas stream is more than 100,000°C/s. This condition can be achieved in the reactor when velocity of the hot hydrogen-containing gas entering in the area of flowing over the cooled body of revolution is no less than 40 m/s.

As compared with the prior art under an equal productivity of reactors, the present invention enables suppression of side reactions and, as a result, formation of the cleaner product having the ratio close to stoichiometric. It is confirmed by the following examples of the present invention embodiments.

The following examples disclose some embodiments of the non-catalytic method for producing hydrogen-containing gas by partial oxidation of natural gas with oxygen using the reactor according to the present invention at various conditions. Examples 3, 4 and 8 relate to the method according to the present invention, and examples 1, 2, 5-7 are presented for the purpose of comparison. In all the Examples, reagents were fed in the reactor at the atmospheric pressure, and the density of the obtained syngas was 0,065 kg/m$^3$.

Example 1.

Oxygen and hydrocarbon gas (methane) were fed in the flow reactor in a ratio close to stoichiometric at the atmospheric pressure. The flow reactor has the inner diameter of 25 mm, its mixing zone and the reaction zone are filled up with a ceramic fill, for example, ball-shaped particles of refractory corundum. The syngas obtained by the combustion reaction at a temperature higher 1300°C and mass flow rate of 0,0001 kg/s was mixed with water injected through the injector in the amount of 0,0011 kg/s and supplied to the cooled body of revolution having the diameter of 20 mm at the ambient temperature that was lower 30°C. At the reactor outlet, the syngas velocity was 12,8 m/s. In this case, the syngas was cooled to the temperature lower 550°C within 18 ms that which did not give the desired result as soot was formed in this cooling time.

Further Examples of the embodiments of the method are similar to Example 1, except that in Example 5, mass flow rate of the syngas conforms to conditions of supersonic flow that inevitably leads to destruction of the reactor parts and does not allow to carry out the syngas production process, and Examples 6-8 relate to reactions carried out without adding water (drip curtain) in the cooling zone.

The Examples show that carrying out the method according to the present invention enables to solve the given technical problem, i.e. to provide production of syngas by non-catalytic high-temperature partial oxidation of raw hydrocarbon gases with suppression of side reactions.

Examples 1-2 and 6-7 show that when a non-optimum mass flow rate of the raw material is selected, the required velocity of the reaction product stream optionally diluted with water may not be achieved before contacting the stream with the cooled body of revolution that will result in increased residence time of the reaction products in the zone of flowing over the cooled body of revolution until the temperature lower 550°C is reached and will create conditions for side reactions including the soot formation reactions.

**Table**

| Parameters | Example No. | | | | | | | |
|---|---|---|---|---|---|---|---|---|
| | 1 | 2 | 3 | 4 | 5 | 6 | 7 | 8 |
| Syngas mass flow rate, kg/s | $1 \cdot 10^{-4}$ | $2 \cdot 10^{-4}$ | $5 \cdot 10^{-4}$ | $1 \cdot 10^{-4}$ | $2 \cdot 10^{-3}$ | $5 \cdot 10^{-4}$ | $1 \cdot 10^{-4}$ | $2 \cdot 10^{-3}$ |
| Syngas mass flow rate, kg/h | 0.36 | 0.72 | 1.80 | 3.60 | 7.20 | 1.80 | 3.60 | 7.20 |
| Syngas volume flow rate nm$^3$/h | 0.78 | 1.57 | 3.94 | 7.88 | 15.75 | 3.94 | 7.88 | 15.75 |
| Water mass flow rate, kg/s | 0.0011 | 0.0022 | 0.0054 | 0.0108 | 0.0215 | 0 | 0 | 0 |
| Syngas velocity at the outlet of the reactor, m/s | 12.8 | 38 | 83.3 | 204.7 | 958.3 | 7.74 | 22.4 | 57.2 |
| Syngas cooling rate, °C/s | 42,000 | 74,000 | 1,81,000 | 399,000 | 843,000 | 57,000 | 89,000 | 121,000 |
| Syngas composition, mol. % $H_2$ | 65 | 66 | 66.66 | 66.66 | * | 65 | 66 | 66.66 |
| CO CO$_2$ and H$_2$O | 32 balance | 33 balance | 33.33 balance | 33.33 balance | | 32 balance | 33 balance | 33.33 balance |
| Soot content, % w/w | >0.5 | traces | no | no | * | 0.5 | traces | no |

* Syngas velocity at the outlet of the reactor is more than the sound velocity that does not allow to carry out the process because of destruction of the reactor parts at this condition.

**Claims**

1. A method for producing hydrogen-containing gas, comprising mixing natural gas with oxygen, partial oxidation of natural gas by oxygen at a temperature ranging from 1300°C to 1700°C to obtain a hydrogen-containing gas, and cooling a stream of the obtained hydrogen-containing gas, wherein the stream of the obtained hydrogen-containing gas is cooled to a temperature lower 550°C at a cooling rate more than 100,000°C/s.

2. The method according to Claim 1, wherein cooling the stream of hydrogen-containing gas is carried out by contacting said stream with a cooled body of revolution.

3. The method according to Claim 2, wherein the stream of hydrogen-containing gas has a linear velocity of at least 40 m/s when contacting with the cooled body of revolution.

4. The method according to Claim 2, wherein water in the amount of at least 10 kg per 1 kg of hydrogen-containing gas is injected in the stream of the hydrogen-containing gas before contacting said stream with the cooled body of revolution.

5. The method according to Claim 1, wherein mixing natural gas with oxygen and partial oxidation of natural gas by oxygen are carried out in a porous medium of a refractory material.

6. The method according to Claim 5, wherein the refractory material is a ceramic material.

7. A reactor for producing hydrogen-containing gas, said reactor comprising successively arranged in the course of the production process: a means for supplying natural gas and oxygen, a natural gas and oxygen mixing zone, a reaction zone for carrying out partial oxidation of natural gas with oxygen to obtain hydrogen-containing gas, and a cooling zone for cooling a stream of the obtained hydrogen-containing gas, wherein the cooling zone is provided with a cooled body of revolution to enable intensive cooling the stream of the hydrogen-containing gas by contacting thereof with said body of revolution.

8.  The reactor according to Claim 7, wherein the cooled body of revolution has a streamline shape.

9.  The reactor according to Claim 7, wherein the reactor is provided with at least one injector to inject water in the cooling zone upstream from the body of revolution.

10. The reactor according to Claim 7, wherein the mixing zone and reaction zone are filled up with a porous refractory material.

**Fig. 1**

## INTERNATIONAL SEARCH REPORT

| | International application No. |
|---|---|
| | PCT/RU 2015/000160 |

| A. CLASSIFICATION OF SUBJECT MATTER |
|---|
| C01B 3/02 (2006.01); C01B 3/36 (2006.01); B01J 7/00 (2006.01); B01J 12/00 (2006.01) |
| According to International Patent Classification (IPC) or to both national classification and IPC |

| B. FIELDS SEARCHED |
|---|
| Minimum documentation searched (classification system followed by classification symbols) |
| C01B 3/00-3/58, C10J 3/00, B01J 7/00, 8/00, 12/00, 19/00 |
| Documentation searched other than minimum documentation to the extent that such documents are included in the fields searched |
| Electronic data base consulted during the international search (name of data base and, where practicable, search terms used) |
| PatSearch (RUPTO internal), USPTO, PAJ, Esp@cenet, DWPI, EAPATIS, PATENTSCOPE |

| C. DOCUMENTS CONSIDERED TO BE RELEVANT | | |
|---|---|---|
| Category* | Citation of document, with indication, where appropriate, of the relevant passages | Relevant to claim No. |
| Y | RU 2191743 C2 (PLACHENOV BORIS TIKHONOVICH et al.) 27.10.2002, the abstract, p. 6, left-hand column, line 64 - right-hand column, line 53, p. 7, right-hand column, lines 12-20, p. 8, left-hand column, lines 7-47 | 7-10 |
| A | | 1-6 |
| Y | SU 924491 A1 (PROIZVODSTVENNOE OBIEDINENIE PO PROEKTIROVANIJU, NALADKE, MODERNIZATSII I REMONTU ENERGETICHESKOGO OBORUDOVANIYA "TSENTROENERGOTSVETMET") 30.04.1982, col. 1, lines 17-27, col. 2, line 25 -col. 3, line 4, col. 4, lines 6-13, fig. 4 | 7-10 |
| A, D | RU 2096313 C1 (EKSPERIMENTALNYI KOMPLEKS "NOVYE ENERGETICHESKIE TEKHNOLOGII" OBIEDINENNOGO INSTITUTA VYSOKIKH TEMPERATUR RAN et al.) 20.11.1997 | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 June 2015 (22.06.2015) | 02 July 2015 (02.07.2015) |
| Name and mailing address of the ISA/ RU | Authorized officer |
| Facsimile No. | Telephone No. |

Form PCT/ISA/210 (second sheet) (April 2005)

**INTERNATIONAL SEARCH REPORT**

| | International application No. |
| --- | --- |
| | PCT/RU 2015/000160 |

C (Continuation).     DOCUMENTS CONSIDERED TO BE RELEVANT

| Category* | Citation of document, with indication, where appropriate, of the relevant passages | Relevant to claim No. |
| --- | --- | --- |
| A | RU 2228901 C2 (INSTITUT NEFTEKHIMICHESKOGO SINTEZA IM. A.V. TOPCHIEVA RAN) 20.05.2004 | 1-10 |
| A | US 5861441 A (MARATHON OIL COMPANY) 19.01.1999 | 1-10 |
| A, D | CN 101245263 A (CHINA PETROCHEMICAL CORPORATION et al.) 20.08.2008 | 1-10 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2191743 C2
- RU 2096313 C1

- CN 101245263 B

**Non-patent literature cited in the description**

- **O.V. KRYLOV.** *Heterogeneous catalysis, Moscow, Academkniga,* 2004, 605-606
- **XING RAO et al.** Combustion Dynamics of Plasma-Enhanced Premixed and Nonpremixed Flames. *Transactions on plasma science,* 12 December 2010, vol. 38, 3265-3271

- **OLEG A. LOUCHEV ; THOMAS LAUDE ; YOICHIRO SATO ; HISAO KANDA.** Diffusion-controlled kinetics of carbon nanotube forest growth by chemical vapor deposition. *Journal of Chemical Physics,* April 2003, vol. 118 (16), 7622-7634
- **C.J. KUHRE et al.** Partial Oxidation Grows Stronger in U.S. *Oil and Gas Journal,* 06 September 1971, vol. 69 (36